# EUROPEAN PATENT APPLICATION

(11) **EP 3 624 282 A1**
(43) Date of publication of application: **18.03.2020**
(21) Application number: 18194817.5
(22) Date of filing: 17.09.2018
(51) Int. Cl.: H02B 11/24

(54) **INTEGRATED SYSTEM OF A DRIVING UNIT FOR ELECTRO-MECHANICAL DEVICES**

(71) Applicant: Microelettrica Scientifica S.p.A., 20090 Buccinasco (Milano) (IT)
(72) Inventor: BURBERI, Massimo, 20131 Milano (IT)
(74) Representative: Prüfer & Partner mbB Patentanwälte · Rechtsanwälte

(57) **Abstract**

The present invention relates to a modular integrated system (1) of a driving unit for electro-mechanical devices (6) for industrial and railways application, comprising a modular connections backbone (2), the modular connections backbone (2) comprising at least an input electrical power conductor (4), at least an output electrical power conductor (5), and at least one fast-on connecting terminal (3) suitable for being connected to at least one corresponding fast-on connecting terminal (7) of the electro-mechanical devices (6) to be integrated.

## Description

### Technical field

The present invention relates to an integrated system of a driving unit of electro-mechanical devices in order to achieve quick specific manufacturing.

More specifically, but not exclusively, the invention relates to integrated systems to be used in industrial application in general, or, more specifically in the railways field.

### Known Art

As it is well known in this specific technical filed, each industrial application involving the driving and control of electro-mechanical devices has different needs and has different requirements in terms of number of devices incorporated into a driving unit or in terms of complexity of the electrical interconnections of these devices.

These requirements are generally different regarding the electrical circuits, which could be different in terms of quality, capacity, security criteria or in terms of their interconnection for a specific application.

For this reason, it is necessary to implement different electro-mechanical driving units for electro-mechanical devices or components in order to satisfy all these requirements. The electro-mechanical devices to be incorporated into a driving unit could be switches, contactors, disconnectors, current or voltage meters, etc. which need to be mounted in a specific configuration in order to obtain the desired global operation.

It is also possible that it is necessary to implement a portion of driving unit including an electrical circuit designed to be interconnected within a pre-existent global circuit. In all these cases one critical requirement is often the space in which the whole circuit or the portion of circuit must be housed.

In this content is substantially impossible to keep a catalogue of driving units including all the electro-mechanical devices and components needed for each particular client's request. On the contrary, it is often necessary to provide a specific design giving to each driving unit a specific structure, carrying out for each case operative tests and structural tests with software programs such as the Finite Element Analysis that could require relevant computational times.

Clearly the need to meet all the client's request in order to comply with a specific design, performing accurate tests with relative corrections and repetition phases renders the manufacturing process considerably time consuming.

Despite of the undoubted advantages provided by this consolidated manufacturing process, which allows to provide driving units with perfectly fitted circuits or circuit portions for each specific case, there are evident drawbacks due to the necessary manufacturing times which are often not in line with the client's expectation.

The technical problem underlining the present invention is that of providing a driving unit having structural and functional features to allow a quick specific design and manufacturing of any kind of electrical circuits.

Another aim of the present invention is to provide a standardization of manufacturing process of such a driving unit.

Another object of the present invention is that of guarantee a simple maintenance of the circuit portions incorporated into such a driving unit.

Another aim of the present invention is to use an assembly technique suitable for allowing quick circuit assembly and disassembly operations.

A further object of the present invention is that of avoiding the extra use of software computational means such as the Finite Element Analysis with the related time-consuming computational times.

Another object of the present invention is that of minimize the quantity of material used for the realization of driving unit or the specific circuits inside. A further aim of the present invention is that of providing a solution which can be mounted in any location inside the specific industrial application, thus allowing the optimization of allowable space.

Finally, an object of the present invention is to provide an optimized solution for the mass production of industrial driving and control units following an assembly line standard flow.

### Summary of the invention

The solution idea at the basis of the present invention is that of providing an integrated system within which electrical functional sub-systems or standard devices can be connected in different configurations to comply with most of the specific requests for operation of the whole driving and control unit system.

In particular, in railways application this solution is particularly suitable for the design of different current collector systems, different propulsion systems, different auxiliary circuit supply systems and/or different passenger heating systems. However, these application should not be considered limitative for the present invention.

According to the above solution idea, the technical problem is solved by a modular integrated system of driving and/or control unit for electro-mechanical devices, in particular for industrial and railways application, comprising at least a modular connections backbone, the modular connections backbone comprising at least an input electrical power conductor, at least an output electrical power conductor and at least one fast-on connecting terminal suitable for being connected to at least one corresponding fast-on connecting terminal on the electro-mechanical devices to be integrated.

The modular structure of the connections backbone allows obtaining specific configurations for the different application requirements, maintaining a standard design of all devices which can be interconnected in different ways.

Preferably the modular integrated system of electro-mechanical devices comprises a modular rear structure, on which said modular connections backbone is fixed.

Advantageously this aspect allows a more stable structure of the whole circuit, avoiding undesirable disconnection.

Moreover, the connections backbone is formed by at least a panel made of insulated material.

According to this particular aspect of the invention, the operation of each device connected to the connections backbone is not influenced or disturbed by the operation of other devices within the circuit.

Advantageously, according to a particular configuration, the electro-mechanical devices are assembled in electrical functional sub-systems which are connected to the connections backbone.

This aspect of the invention allows a more compact global configuration of the electrical system and also a saving in terms of material.

According to another aspect of the invention, the electro-mechanical devices comprise at least two current meters or at least two voltage meters in a current metering application.

According to a further aspect of the invention, the electro-mechanical devices comprise at least a contactor or at least a disconnector in an application of input filter to an engine drive inverter.

According to a particular aspect of the invention, the electro-mechanical devices comprise at least a 4-pole disconnector in an auxiliary service application.

According to another aspect of the invention, the electro-mechanical devices comprise at least a current meter in a current collector application.

According to still another aspect of the invention, the electro-mechanical devices comprise at least a parallelly mounted contactor group, at least a resistance and at least a contactor in a Heating, Ventilation and Air Conditioning (HVAC) application.

This particular implementation of electro-mechanical devices are generally specific for railways application but are not limitative for the scope of protection of the present invention.

Finally, it must be noted that one or more modular integrated system can be implemented on any electrical assembly without to depart from the scope of the present invention.

Further features and advantages of the integrated modular system of a driving or control unit of the present invention will appear from the following description given by way of not limiting examples with reference to the enclosed drawings figures.

### Brief description of the drawings

- Figure 1 shows a perspective and schematic view of an integrated system of driving and/or control unit realized according to the present invention;
- Figure 2 shows another perspective and schematic view of the integrated system of Figure 1;

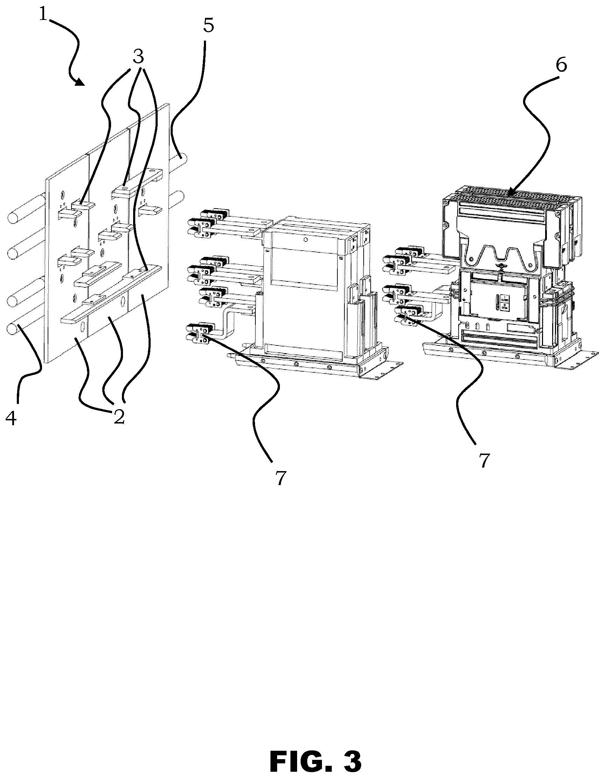

- Figure 3 shows a perspective and schematic view of an integrated system with multiple electro-mechanic devices connected realized according to the present invention;
- Figures 4A and 4B shows particular electrical schemes of a circuit realized according to the present invention;
- Figure 5 shows another particular electrical scheme of a circuit realized according to the present invention;
- Figure 6 shows still another particular electrical scheme of a circuit realized according to the present invention;
- Figure 7 shows a further particular electrical scheme of a circuit realized according to the present invention;
- Figure 8 shows another particular electrical scheme of a circuit realized according to the present invention.

### Detailed description

With reference to the drawings figures, with 1 is globally and schematically shown a modular integrated system of driving and/or control unit for electro-mechanical devices, realized according to the present invention.

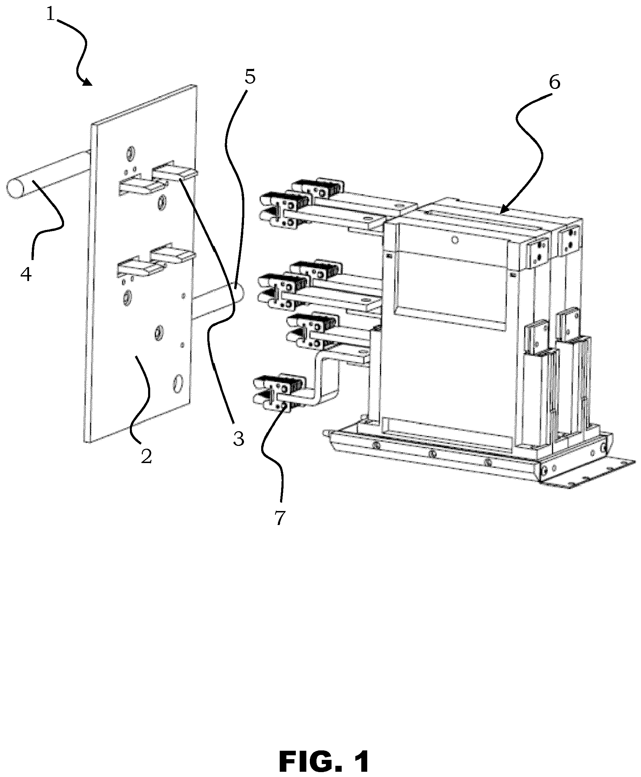

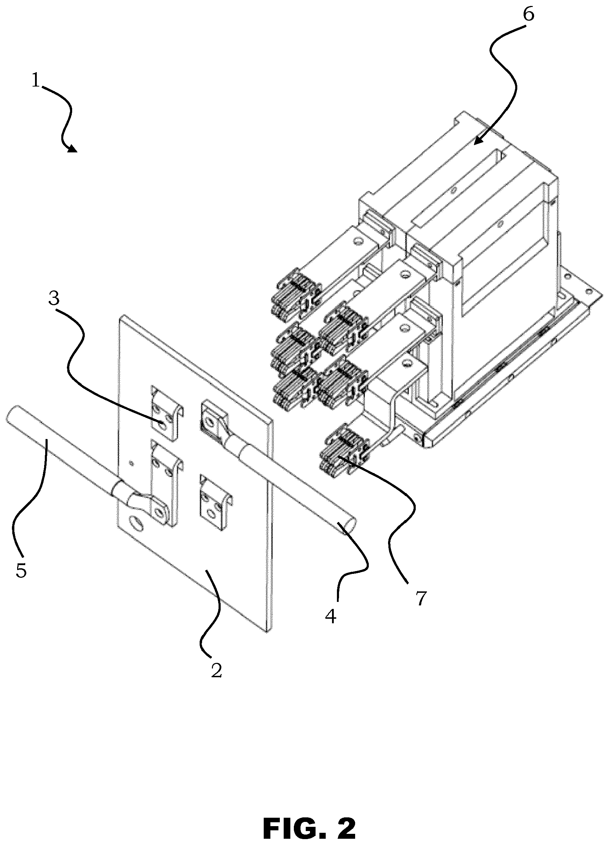

In the specific embodiment shown in the figures, with particular reference to figures 1 and 2, it is shown a supporting board or plate that we will call hereinafter as connections backbone 2. The connections backbone 2 comprises fast-on connecting terminals 3 and relative electrical connections according to the requirements of the specific electrical circuit. For the purpose of the present invention, the fast-on connecting terminals may be male or female mechanical and/or electrical connectors without departing from the principle of the present invention.

Furthermore, the connections backbone 2 comprises at least an input electrical power conductor 4 and at least an output electrical power conductor 5.

At least an electro-mechanical device 6 is connected to the connections backbone 2.

The electro-mechanical device 6 can be an active driving device such as a switch, a changeover type switch, a disconnector, a contactor, a current or a measuring device such as a voltage sensor, or other electro-mechanical devices, particularly suitable for railway applications in which, for example, a high direct current must be switched on and off with switching actions, in particular to protect and/or set-up the passengers heating system and other electrical loads mounted on board of the rolling stock.

The electro-mechanical device 6 can be assembled in electrical functional subsystems connected to said connections backbone 2, in order to obtain a more compact global configuration.

The fast-on connecting terminals 3 and the relative electrical connections according to the requirements of the global circuit system are adapted to be connected with corresponding fast-on connecting terminals 7 of the electro-mechanical subsystem 6.

The fast-on connecting terminals 7 are specific for high-current applications on moving devices, ensuring a stable connection even in the presence of significant vibrations, but allowing, at the same time, a quick attach or fixing and detachment when desired, to facilitate the operations of implementation and maintenance of the system as a whole and of its individual devices.

The connections backbone 2 is modular in order to allow the implementation of different circuit configurations with different requirements of different applications in terms of devices and in terms of space, with an optimization comparable to that guaranteed by a customized design for each specific application.

Preferably, the connections backbone 2 is formed by at least a panel made of insulated material. In this way, electrical interferences between devices operations are avoided.

Moreover, the input electrical power conductor 4 and the output electrical power conductor 5 are electrical connections bars, which guarantee a stable connection of the electrical circuit.

Furthermore, preferably the driving and/or control unit of the modular integrated system 1 comprises a modular rear structure or frame (not shown) on which the connections backbone 2 is fixed, in order to obtain a more stable structure of the whole circuit, avoiding undesirable disconnection.

In other words, the connections backbone 2 is installed on a supporting frame wherein the connections backbone 2 remains on the back side while all the other electro-mechanical devices or components are mounted on the front side in a substantially fast-on manner.

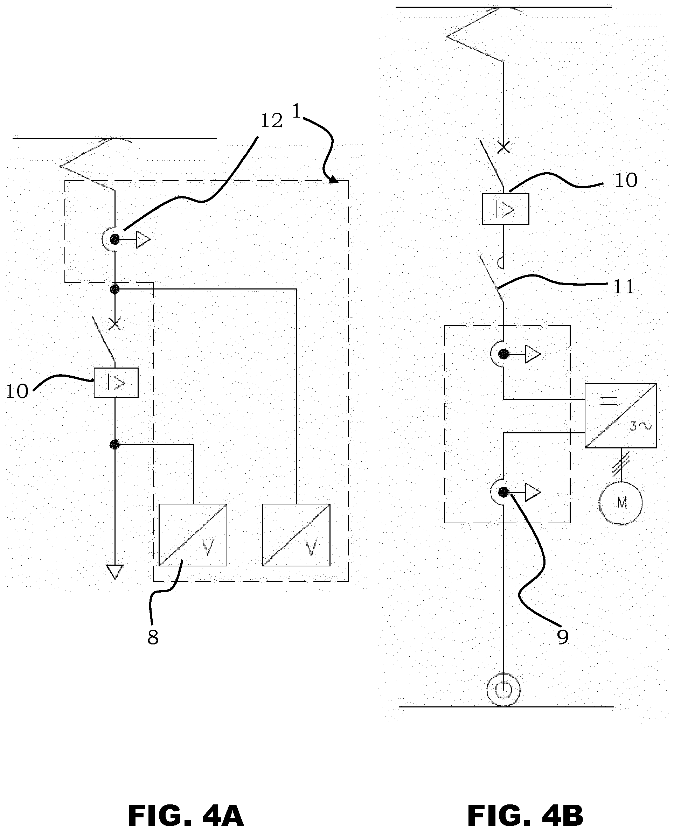

Other particular implementations of electro-mechanical devices in the modular integrated system 1 will be described below, according to the present invention, in particular looking at the exemplary figures 4A-8.

In particular, these implementations regard the railways applications. However, other configurations are possible without departing from the scope of protection defined from the alleged claims.

Through the figures, the areas framed with broken lines indicate the integrated devices through the integrated modular system 1.

In particular, in Figures 4A-4B, two different configurations of electro-mechanical devices in a current metering application are shown.

In this application, the modular integrated system 1 comprises at least two voltage meters 8 or at least two current meters 9.

These alternative configurations allow substantially to implement a similar operation that is to say: controlling the design operation of the whole electrical circuit. This circuit is generally connected to a breaker 10 or to a contactor 11 in order to interrupt the current flow between two terminal poles of the circuit and to protect the circuit from over-voltages, over-currents and harmonics.

In Figure 4A, a current meter 12 is implemented in the modular integrated system 1 together with two current meters 9, in order to improve the operation of the modular integrated system 1. Such solution is not fundamental, but it is strong evidence that it is also possible to modify or improve the circuit by inserting only a standard device in the modular integrated system 1 without a specific preliminary design.

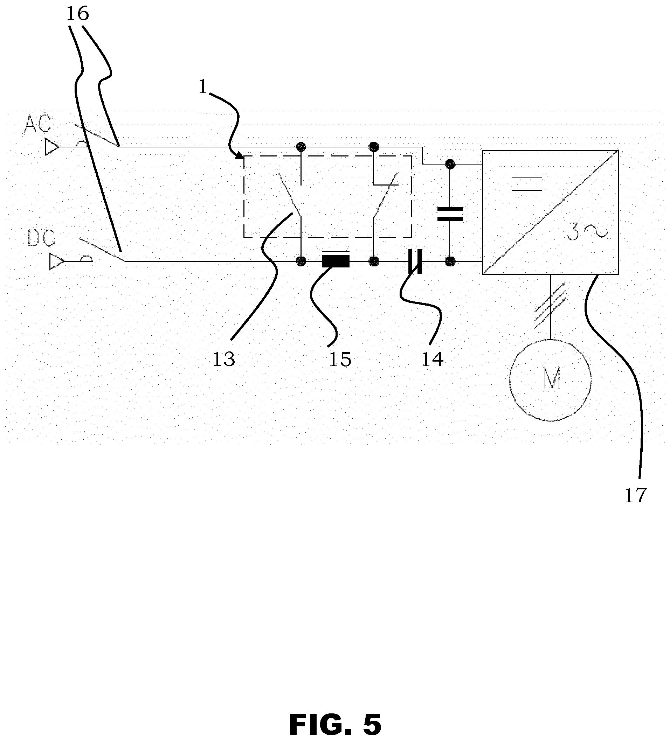

In Figure 5, a configuration of electro-mechanical devices in an engine protection application is shown, in particular an application of input filter to an engine drive inverter.

In this application, the modular integrated system 1 comprises at least a disconnector 13 or at least a contactor 19 or 20, not shown in Figure 5. In this exemplary embodiment only two disconnectors 13 are shown.

In this exemplary embodiment, the modular integrated system 1 with relative devices forms an EMC filter together with two filter capacitors 14 and a filter inductance 15, connected in series, interposed in an AC/DC converter between a power supply 16 and the engine drive inverter 17.

This filter configuration allows the inverter to be protected against electromagnetic interference from the outside, avoiding damage and ensuring compliance with current regulations.

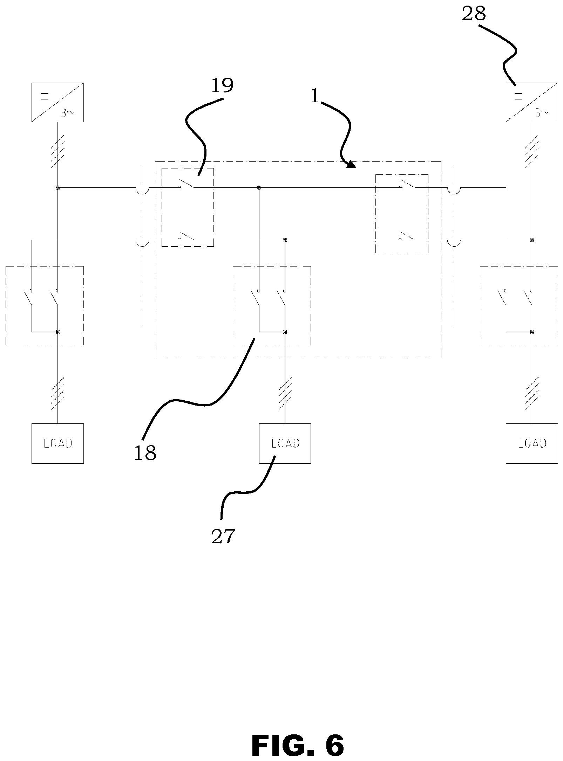

In Figure 6, a configuration of electro-mechanical devices in auxiliary service configuration in medium tri-phase voltage is shown.

In this application, the modular integrated system 1 comprises at least a 4-pole disconnector 18.

In the shown exemplary embodiment are shown three 4-pole disconnectors 18 suitably connected to loads 27 and to static groups of auxiliary services 28.

Moreover, in the exemplary embodiment, two couples of contactors 19 are connected in series with the 4-pole disconnectors 18 in order to protect the circuit from malfunctions.

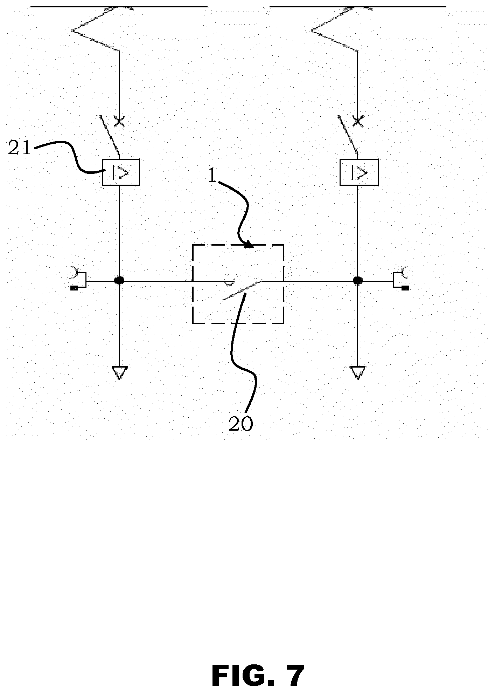

In Figure 7, a configuration of electro-mechanical devices in a current collector application is shown.

In this application, the modular integrated system 1 comprises at least a contactor 20.

In this exemplary embodiment are also provided two breakers 21 in order to protect the circuit from malfunctions.

This circuit allows to carry electrical power from electrical third rails to the electrical equipment of the vehicles.

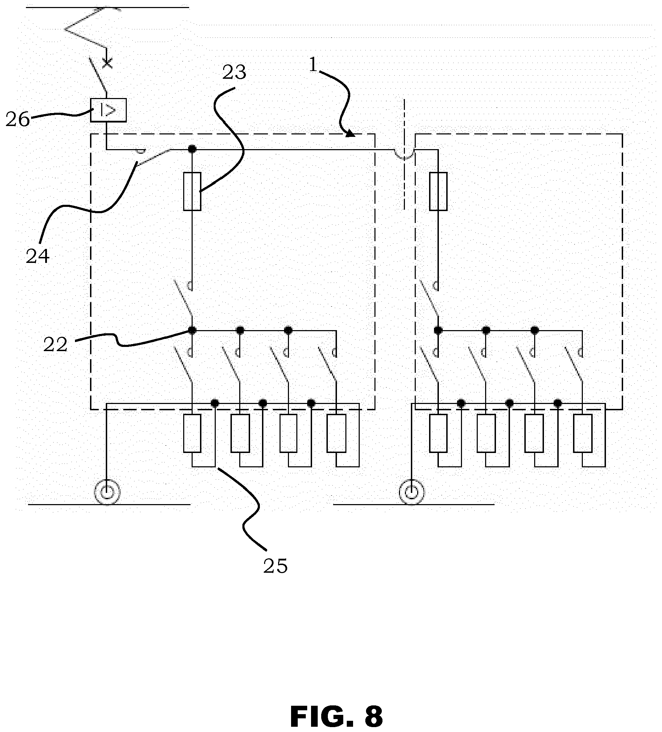

In Figure 8, a configuration of electro-mechanical devices in a heating, ventilation and air conditioning (HVAC) application is shown.

In this application, the modular integrated system 1 comprises a parallelly mounted contactor group 22, at least a resistance 23 and at least a contactor 24.

The parallelly mounted contactor group 22 is connected to relative parallelly connected resistances 25.

Moreover, the whole circuit comprises a breaker 26 in order to protect the circuit from malfunctions.

This circuit, normally controlled by 24 volts, pass line voltage to a motor or a compressor.

Through the different applications, the common concept is based on the identification and implementation of the "basic" function modules whose configuration is optimized in order to realize the complex functions, also identified, and on the concept of mechanically and electrically connecting these functional modules in a simple and predefined way on the connections backbone, inside which the specific connections of the single application are made.

Advantageously, the present invention makes it possible to speed up the construction phase of a complex circuit system for each specific application case, shortening the ad hoc design phase, and having a consequent impact in terms of time.

Another advantage is due to the fact that the maintenance of the circuit is very simple. In fact, it is necessary only to disconnect the interested devices providing with the maintenance or the substitution.

Another advantage is due to the avoiding the extra use of software computational means such as the Finite Element Analysis with the related computational times. It is not advantageous only in terms of time but also in terms of minimum computational capability requested in the design phase.

It is also simple to assemble and disassemble the whole integrated modular system of driving and control unit, using it in another application without problems of incompatibility.

Moreover, advantageously, the present solution allows a standardization of manufacturing process, guaranteeing an optimized solution for the mass production following an assembly line standard flow.

Another advantage of the present invention is that the quantity of material used for the realization of specific circuits is minimized, optimizing in a preliminary phase the distance between the connections.

Moreover, the present solution can be mounted in any location inside the specific industrial application, guaranteeing the optimization of allowable space.

Another advantage of the present invention is the possibility to be applied in any electrical assembly which requires an integrated system.

Finally, another advantage of the present invention is that is clearly very competitive also from an economic point of view.

In the previous lines the directional terms like: "forward", "rearward", "front", "rear", "up", "down", "above", "below", "upward", "downward", "top", "bottom", "side", "vertical", "horizontal", "perpendicular" and "transverse" as well as any other similar directional terms refer just to the device as shown in the drawings and do not relate to a possible use of the same device. Accordingly, these directional terms, as utilized to describe the contactor in its upright vertical position on a horizontal surface have just the meaning to identify a portion of the device with respect to another portion as shown in the figures.

The term "comprising" and its derivatives, as used herein, are intended to be open ended terms that specify the presence of the stated features, elements, devices, groups, integers, and/or steps, but do not exclude the presence of other unstated features, elements, devices, groups, integers and/or steps. This concept also applies to words of similar meaning, for example, the terms "have", "include" and their derivatives.

Moreover, the terms "member", "section", "portion", "part" and "element" when used in the singular can have the dual meaning of a single part or a plurality of parts.

## Claims

1. Modular integrated system (1) of a driving unit for electro-mechanical devices (6), in particular for industrial and railways application, comprising at least a modular connections backbone (2), said modular connections backbone (2) comprising at least an input electrical power conductor (4), at least an output electrical power conductor (5),
**characterized in that** said modular connections backbone (2) further comprises at least one fast-on connecting terminal (3) suitable for being connected to at least one corresponding fast-on connecting terminal (7) of said electro-mechanical devices (6) to be integrated.

2. Modular integrated system (1) of a driving unit for electro-mechanical devices (6) according to claim 1, further comprising a modular rear supporting structure, on which said modular connections backbone (2) is fixed with all the electro-mechanical devices (6) or component installed on a front side of the supporting structure.

3. Modular integrated system (1) of a driving unit for electro-mechanical devices (6) according to claim 1 or 2, wherein said connections backbone (2) is formed by at least one panel made of insulated material.

4. Modular integrated system (1) of a driving unit for electro-mechanical devices (6) according to any one of previous claims, wherein said electro-mechanical devices (6) comprise at least two voltage meters (8) or at least two current meters (9) in a current metering application.

5. Modular integrated system (1) of a driving unit for electro-mechanical devices (6) according to any one of previous claims, wherein said electro-mechanical devices (6) comprise at least a contactor or at least a disconnector (13, 18) in an application of input filter to an engine drive inverter.

6. Modular integrated system (1) of a driving unit for electro-mechanical devices (6) according to any one of previous claims, wherein said electro-mechanical devices (6) comprise at least a 4-pole disconnector (18) in an auxiliary service application.

7. Modular integrated system (1) of a driving unit for electro-mechanical devices (6) according to any one of previous claims, wherein said electro-mechanical devices (6) comprise at least a contactor (20) in a current collector application.

8. Modular integrated system (1) of a driving unit for electro-mechanical devices (6) according to any one of previous claims, wherein said electro-mechanical devices (6) comprise at least a parallelly mounted contactor group (22), at least a resistance (23) and at least a contactor (24) in a Heating, Ventilation and Air Conditioning (HVAC) application.

9. Modular integrated system (1) of a driving unit for electro-mechanical devices (6) according to any one of previous claims, wherein said electro-mechanical devices (6) are assembled in electrical functional sub-systems, said electrical functional subsystem being connected to said connections backbone (2).

10. Modular integrated system (1) of a driving unit for electro-mechanical devices (6) according to any one of previous claims, wherein said connections backbone (2) is formed by at least one panel with at least one aperture for the at least one fast-on connecting terminal (3).

11. Modular integrated system (1) of a driving unit for electro-mechanical devices (6) according to the previous claim, wherein the at least one input electrical power conductor (4) and the at least one output electrical power conductor (5) are disposed on a first side of the panel, wherein at least one electro-mechanical device (6) is disposed on a second side of the panel, opposing the first side, with the panel therebetween.

12. Electrical assembly comprising at least a modular integrated system (1) of a driving unit for electro-mechanical devices (6) according to any one of claims 1 to 11.
